(19) Europäisches Patentamt
European Patent Office
Office européen des brevets

(11) Veröffentlichungsnummer : **0 336 205 B1**

# (12) EUROPÄISCHE PATENTSCHRIFT

(45) Veröffentlichungstag der Patentschrift : **14.10.92 Patentblatt 92/42**

(21) Anmeldenummer : **89105037.9**

(22) Anmeldetag : **21.03.89**

(51) Int. Cl.$^5$ : **C08G 18/42,** C08G 18/73, C08G 18/79, C08G 18/80, C09D 175/06

## (54) Verfahren zur Herstellung von Isocyanuratpolyisocyanaten, die nach diesem Verfahren erhaltenen Verbindungen und ihre Verwendung.

Die Akte enthält technische Angaben, die nach dem Eingang der Anmeldung eingereicht wurden und die nicht in dieser Patentschrift enthalten sind.

(30) Priorität : **02.04.88 DE 3811350**

(43) Veröffentlichungstag der Anmeldung : **11.10.89 Patentblatt 89/41**

(45) Bekanntmachung des Hinweises auf die Patenterteilung : **14.10.92 Patentblatt 92/42**

(84) Benannte Vertragsstaaten : **BE DE ES FR GB IT NL**

(56) Entgegenhaltungen :
**EP-A- 0 155 559**
**DE-A- 3 219 608**
**FR-A- 1 373 136**
**US-A- 4 789 705**

(73) Patentinhaber : **BAYER AG**
**W-5090 Leverkusen 1 Bayerwerk (DE)**

(72) Erfinder : **Pedain, Josef, Dr.**
**Haferkamp 6**
**W-5000 Köln 80 (DE)**
Erfinder : **Schönfelder, Manfred, Dr.**
**Hohenstrasse 126**
**W-5090 Leverkusen 3 (DE)**
Erfinder : **Höfer, Hans-Joachim, Dr.**
**Hittorfstrasse 17**
**W-5000 Köln 80 (DE)**
Erfinder : **Krauss, Walter, Dr.**
**Feuerbachstrasse 5**
**W-5090 Leverkusen (DE)**

EP 0 336 205 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft ein neues Verfahren zur Herstellung von Urethan- und Estergruppen enthaltenden Isocyanuratpolyisocyanaten (Isocyanuratgruppen aufweisende Polyisocyanaten), die nach diesem Verfahren erhaltenen Verbindungen und ihre Verwendung als Polyisocyanatkomponente bei der Herstellung von Polyurethankunststoffen und insbesondere in Zweikomponenten-Polyurethanlacken.

Aliphatische Isocyanuratpolyisocyanate, insbesondere solche auf der Basis 1,6-Diisocyanatohexan (nachstehend "HDI" genannt) haben großtechnische Bedeutung erlangt. Sie werden vor allem als Polyisocyanatkomponente in Zweikomponenten-Polyurethanlacken aber auch zur Herstellung von unter dem Einfluß von Feuchtigkeit härtenden Einkomponenten-Polyurethan-Bindemitteln oder, in mit Blockierungsmitteln für Isocyanatgruppen blockierter Form, in Hitze-vernetzbaren Polyurethanlacken eingesetzt. Diese Lacke dienen überwiegend zur Lackierung von wenig flexiblen Substraten wie Metall und Holz und zeichnen sich durch hohe Lichtechtheit und Witterungsbeständigkeit, hohe Härte und sehr gute Haftung aus. Speziell Isocyanuratgruppen enthaltende, auf HDI basierende Polyisocyanate zeichnen sich gegenüber entsprechenden Biurettypen, die ebenfalls großtechnisch genutzt werden, durch eine stark verbesserte Vergilbungs- und Chemikalienbeständigkeit z.B. Teerfleckenbeständigkeit aus.

Die chemischen Grundlagen der verschiedenen Polyurethanlacke werden u.a. in "Lackkunstharze" von Hans Wagner und Hans Friedrich Sarx, Carl Hanser Verlag, München 1971, Seiten 153 bis 173 und im "Lehrbuch der Lacke und Beschichtungen" Band 1, Teil 2 von Hans Knittel, Verlag W.A. Colomb, Berlin-Oberschwandorf 1973, Seiten 512 bis 612 beschrieben.

Die Polyurethanlacke gemäß Stand der Technik, insbesondere die Zweikomponenten-Polyurethanlacke führen jedoch oft zu hochvernetzten Lacküberzügen, deren Elastizität den diesbezüglichen Anforderungen an Überzüge für flexible Substrate oft nicht genügt. Besonders im Automobilbau werden in zunehmendem Umfang flexible Kunststoffteile zur Erhöhung der Sicherheit eingesetzt. Diese flexiblen Formteile (Stoßstangen, Spoiler, Gehäuse für Außenspiegel u.dgl.) sind relativ groß und bestimmen daher wesentlich das äußere Aussehen des Fahrzeugs. Aus diesem Grund ist eine Lackierung der rohen Teile erforderlich. Es kommt hinzu, daß die Oberflächen der Kunststoffe bei Bewitterung abgebaut werden und daher gegen Witterungseinflüsse geschützt werden müssen.

Elastische Lackierungen sind jedoch auch für weniger elastische Kunststoffteile erforderlich, um mechanische Schädigung der Teile zu verhindern. So müssen beispielsweise harte aber zähe Thermoplaste mit hochelastischen, äußerst beständigen Lacken lackiert werden, um zu verhindern, daß der Lackfilm bei mechanischer Beschädigung oder durch andere äußere Einflüsse reißt und die Risse sich in dem kompakten Kunststoff fortsetzen. An die Lackierung, vor allem an die Decklackierung, solcher Teile werden daher weit über das Maß einer üblichen Lackierung hinausgehende Ansprüche gestellt.

Eine Teillösung dieser Probleme war die Entwicklung von Hydroxylpolyestern und -polyacrylaten, die aufgrund ihres Aufbaus zu elastischen Lackfilmen verarbeitet werden können. Dadurch konnten allerdings nicht alle Schwierigkeiten behoben werden : Die Lackfilme die entstehen, sind oft nicht ausreichend hart und nicht genügend vernetzt und/oder zu wenig chemikalienbeständig.

Die für die Vernetzung dieser Polyhydroxylverbindungen zur Verfügung stehenden, auf Diisocyanaten wie z.B. HDI basierenden Isocyanuratpolyisocyanate sind außerdem oft unverträglich mit den Polyhydroxylverbindungen oder führen zu Trübungen bei Verdünnung mit verschiedenen Lösemitteln.

Diese Nachteile haben verhindert, daß die bekannten Isocyanuratpolyisocyanate, die auf HDI basieren, trotz ihrer sonstigen überragenden technischen Eigenschaften auf dem Gebiet der Kunststofflackierung eine wesentliche Bedeutung erlangt haben.

Es war daher die der Erfindung zugrundeliegende Aufgabe, neue Isocyanuratpolyisocyanate zur Verfügung zu stellen, welche in Kombination mit den Polyhydroxylverbindungen gemäß Stand der Technik Zweikomponenten-Polyurethanlacke ergeben, die den genannten besonderen Anforderungen genügen und insbesondere für die Lackierung von elastischen Kunststoffteilen optimal geeignet sind, und die außerdem auch vorteilhaft zur Herstellung von feuchtigkeitshärtenden Einkomponenten-Bindemitteln bzw., in blockierter Form, zur Herstellung von Hitze-vernetzbaren Lackbindemitteln verwendet werden können.

Diese Aufgabe konnte durch die Bereitstellung des nachstehend näher beschriebenen erfindungsgemäßen Isocyanuratpolyisocyanaten gelöst werden.

Gegenstand der Erfindung ist ein Verfahren zur Herstellung von Isocyanuratpolyisocyanaten durch Trimerisierung eines Teils der Isocyanatgruppen von 1,6-Diisocyanatohexan oder von dessen Gemischen mit anderen (cyclo)aliphatischen Diisocyanaten mit mindestens 30 mol-% 1,6-Diisocyanatohexan in Gegenwart von die Trimerisierung von Isocyanatgruppen beschleunigenden Katahysatoren, Abbruch der Trimerisierungsreaktion beim jeweils gewünschten Trimerisierungsgrad und Entfernung von nicht umgesetztem Ausgangsdiisocyanat bis auf einen Restgehalt von max. 0,5 Gew.-% und von gegebenenfalls weiteren flüchtigen

Bestandteihen,

das dadurch gekennzeichnet ist, daß man dem Reaktionsgemisch mindestens ein Estergruppen aufweisendes Diol mit einem mittleren aus der Hydroxylzahl berechneten Molekulargewicht von 350 bis 950 in einer Menge von 1 bis 50 Gew.-%, bezogen auf das Gewicht des als Ausgangsmaterial eingesetzten Diisocyanats, gegebenenfalls unter Mitverwendung von Estergruppen-freien Diolen des Molekulargewichtsbereichs 62 bis 300 unter Einhaltung eines Molverhältnisses von Estergruppen-freiem Diole zu Estergruppen enthaltenden Diol von bis zu 1:1, hinzufügt und mit einem Teil der vorliegenden Isocyanatgruppen unter Urethanbihdung abreagieren läßt, wobei diese Diolzugabe vor, während und/oder nach der Trimerisierung, jedoch vor Entfernung des überschüssigen Ausgangsdiisocyanats erfolgen kann,

und wobei die Art und Mengenverhältnisse der Reaktionspartner so gewählt werden, daß in dem Reaktionsgemisch ohne Einbeziehung von gegebenenfalls mitverwendetem inerten Lösemittel nach beendeter Umsetzung noch mindestens 10 Gew.-%o an freiem Ausgangsdiisocyanat vorliegen und das Molverhältnis von Isocyanuratgruppen zu Urethangruppen in den Verfahrensprodukten bei 20:1 bis 0,2:1 liegt.

Gegenstand der Erfindung sind auch die nach diesem Verfahren erhaltenen Isocyanuratpolyisocyanate.

Gegenstand der Erfindung ist schließlich auch die Verwendung der nach diesem Verfahren erhaltenen Isocyanuratpolyisocyanate, gegebenenfalls in mit Blockierungsmitteln für Isocyanatgruppen blockierter Form, zur Herstellung von Polyurethankunststoffen, insbesondere in Zweikomponenten-Polyurethanlacken.

Die Herstellung von Isocyanuratpolyisocyanaten ist bereits bekannt (vgl. z.B. GB-PS 920 080, DE-AS 1 667 309, DE-OS 3 100 262, DE-OS 3 219 608, DE-OS 3 240 613, EP-A-10 589, EP-A-57 653, EP-A-89 297 oder EP-A-187 105). In einigen dieser Vorveröffentlichungen wird auch die Mitverwendung von unterschüssigen Mengen an Hydroxylgruppen aufweisenden Verbindungen erwähnt.

So beschreibt beispielsweise die DE-AS 1 667 309 die Herstellung von Isocyanuratpolyisocyanaten unter Verwendung von Hydroxylgruppen aufweisenden Verbindungen als Co-Katalysatoren. Die DE-OS 3 219 608 beschreibt die Mitverwendung von mehrwertigen Alkoholen eines unter 3000 liegenden Molekulargewichts in einer Menge von bis zu 15 Mol-%, bezogen auf eingesetztes HDI, bei der Herstellung von Isocyanuratpolyisocyanaten auf Basis dieses Ausgangsdiisocyanats. Zu den gemäß dieser Vorveröffentlichung geeigneten, mehrwertigen Alkoholen gehören auch nicht näher spezifizierte Polyesterpolyole. Beim Verfahren der EP-A-155 559 werden niedermolekulare Diole mit seitenständigen Alkylresten als Modifizierungsmittel mitverwendet.

Bei allen bekannten, vorveröffentlichten Verfahren werden mit der Urethanmodifizierung lediglich die Ziele verfolgt, ein geeignetes Lösemittel für den Katalysator bereitzustellen, eine geeignete Cokatalyse zu erreichen oder die Verträglichkeit mit verschiedenen Polyolen zu erzielen. Keine der genannten Vorveröffentlichungen gibt einen Hinweis, wie es möglich ist, Isocyanuratpolyisocyanate so zu modifizieren, daß sie optimal zur Herstellung von hochelastischen Lacken, die ihre Elastizität auch bei tiefen Temperaturen von bis zu -40° C beibehalten, gestatten.

Ausgangsmaterialien für das erfindungsgemäße Verfahren sind (i) aliphatische Diisocyanate und (ii) ausgewählte Polyesterdiole.

Bei den als Ausgangsdiisocyanat (i) eingesetzten aliphatischen Diisocyanaten handelt es sich um organische Diisocyanate mit aliphatisch und/oder cycloaliphatisch gebundenen Isocyanatgruppen. Typische Beispiele sind 1,6-Diisocyanatohexan (HDI), 1-Isocyanato-3,3,5-trimethyl-5-isocyanatomethyl-cyclohexan (IPDI) oder 4,4′-Diisocyanato-dicyclohexylmethan. Andere (cyclo)aliphatische Diisocyanate als HDI werden allerdings allenfalls als Abmischkomponente mit HDI verwendet. Dies bedeutet, daß es sich bei den erfindungsgemäß zum Einsatz gelangenden Ausgangsdiisocyanaten entweder um HDI oder um Gemische von HDI mit anderen (cyclo)aliphatischen Diisocyanaten der beispielhaft genannten Art handelt, mit der Maßgabe, daß in den Gemischen mindestens 30 Mol-%, vorzugsweise mindestens 70 Mol-% HDI vorliegen. Ganz besonders bevorzugt wird HDI als alleiniges Ausgangsdiisocyanat verwendet.

Die erfindungsgemäß als Ausgangsmaterialien einzusetzenden Diisocyanate können in technischer Reinheit verwendet werden. Ganz besonders bevorzugt wird jedoch ein von Kohlendioxid weitgehend befreites HDI als alleiniges Ausgangsdiisocyanat verwendet, da mit dessen Verwendung eine besonders schonend ablaufende Trimerisierungsreaktion unter Verwendung von minimalen Mengen an Katalysatoren möglich ist.

Das besonders bevorzugt als Ausgangsdiisocyanat zum Einsatz gelangende HDI weist einen Gehalt an Kohlendioxid von weniger als 20 ppm (Gewicht), vorzugsweise von weniger als 10 ppm (Gewicht) und besonders bevorzugt von weniger als 5 ppm (Gewicht) auf.

Technisches, durch Destillation gereinigtes HDI, wie es bislang auch zur Herstellung von Isocyanuratgruppen aufweisenden Polyisocyanaten eingesetzt wurde, weist beträchtliche Mengen (ca. 20 ppm bis 100 ppm (Gewicht)) an Kohlendioxid auf.

Kohlendioxid kann bei der Herstellung in das HDI gelangen, beispielsweise bei der Phosgenierung von Kohlensäuresalzen des Hexamethylendiamins. Es kann beim Lagern aus der Luft aufgenommen werden, und

es kann durch chemische Reaktion der NCO-Gruppen, z.B. durch Carbodiimidbildung oder mit einer Spur Feuchtigkeit, entstehen. Frisch durch Vakuumdestillation gereinigtes HDI enthält nach 24 Stunden im verschlossenen Gefäß beispielsweise 40 ppm Kohlendioxid. Über einen Zeitraum von ca. 6 Monaten gelagertes HDI kann, falls das Gebinde während der Lagerzeit geöffnet wurde, bis zu 0,6 Gew.-% Kohlendioxid enthalten.

Die Entfernung von Kohlendioxid aus HDI kann durch Ausblasen mit Reinstickstoff oder Edelgas, zum Beispiel mit Argon, erfolgen, z.B. bei 0 - 70° C. Auch eine höhere Temperatur kann angewendet werden, bietet aber keine entscheidenden Vorteile.

Es ist natürlich ebenfalls möglich und stellt ebenfalls eine bevorzugte Variante dar, zunächst HDI mit einem höher als 20 ppm liegenden Gehalt an Kohlendioxid mit unterschüssigem Esterdiol erfindungsgemäß zu modifizieren, dann das gelöste Kohlendioxid weitgehend zu entfernen, und schließlich die Trimerisierungsreaktion durchzuführen.

Die beim erfindungsgemäßen Verfahren mitzuverwendenden Polyesterdiole (ii) weisen ein mittleres, aus der Hydroxylzahl berechenbares Molekulargewicht von 350 bis 950, vorzugsweise 500 bis 800 auf. Es handelt sich um an sich bekannte Polyesterdiole, die aus Diolen und Dicarbonsäuren aufgebaut sind. Geeignete Diole zur Herstellung der Polyesterdiole sind beispielsweise Dimethylolcyclohexan, Ethandiol, 1,2- und 1,3-Propandiol, 1,2-, 1,3- und 1,4-Butandiol und Neopentylglykol. Bevorzugt sind dessen Gemische mit 1,6-Hexandiol, besonders bevorzugt ist 1,6-Hexandiol als ausschließliche Diolkomponente. Geeignete Dicarbonsäuren sind beispielsweise aromatische Dicarbonsäuren wie Phthalsäure, Isophthalsäure und Terephthalsäure, cycloaliphatische Dicarbonsäuren wie Hexahydrophthalsäure, Tetrahydrophthalsäure, Endomethylentetrahydrophthalsäure bzw. deren Anhydride und aliphatische Dicarbonsäuren, die bevorzugt Verwendung finden, wie Bernsteinsäure, Glutarsäure, Adipinsäure, Korksäure, Azelainsäure und Sebacinsäure oder deren Anhydride.

Beliebige Gemische der beispielhaft genannten Ausgangsmaterialien zur Herstellung der Polyester können ebenfalls eingesetzt werden. Weiterhin ist es möglich, beim erfindungsgemäßen Verfahren Gemische verschiedener Polyester der genannten Art zu verwenden.

Besonders bevorzugt werden jedoch Polyesterdiole aus ε-Caprolacton des genannten Molekulargewichtsbereichs eingesetzt, die in an sich bekannter Weise aus einem Diol der oben beispielhaft genannten Art als Startermolekül und ε-Caprolacton hergestellt worden sind. Hier wird vorzugsweise als Startermolekül 1,6-Hexandiol verwendet.

Ganz besonders bevorzugt als Komponente (ii) sind ε-Caprolactondiole, die auf Hexandiol-1,6 gestartet sind und die eine sehr enge Oligomerenverteilung aufweisen, was durch Verwendung von Bortrifluorid-Etherat oder organischen Zinnverbindungen als Katalysator bei der Polymerisierung erreicht werden kann. Diese ganz besonders bevorzugten Esterdiole bestehen zu mehr als 50 Gew.-% aus Molekülen in einem Molekulargewichtsbereich von 460 bis 802.

Neben diesen erfindungsgemäß zu verwendenden Diolen können auch Estergruppen-freie Diole mitverwendet werden, was aber weniger bevorzugt ist. Als solche kommen z.B. solche des Molekulargewichtsbereichs 62 bis 300 in Frage wie Ethandiol, 1,3-Butandiol, 2,2,4-Trimethylpentandiol-1,3 und besonders 2-Ethylhexandiol-1,3. Das Molverhältnis von Estergruppenfreiem Diol zu Estergruppen enthaltendem Diol kann bis zu 1:1 betragen.

Das erfindungsgemäße Verfahren kann im Prinzip in völliger Analogie zu den bekannten Verfahren zur Herstellung von Isocyanuratpolyisocyanaten durchgeführt werden. Dies bedeutet insbesondere, daß die bekannten Trimerisierungskatalysatoren des Standes der Technik, wie sie beispielsweise in den obengenannten Literaturstellen empfohlen werden, verwendet werden können.

Vorzugsweise werden beim erfindungsgemäßen Verfahren quaternäre Ammoniumhydroxide als Katalysator eingesetzt. Grundsätzlich geeignet sind alle beliebigen quaternären Ammoniumhydroxide, wie sie bereits früher als Trimerisierungskatalysatoren für Isocyanatgruppen empfohlen worden sind. Geeignet sind beispielsweise die quaternären Ammoniumhydroxide gemäß US-PS 3 487 080, Kolonne 2, Zeilen 10 bis 38 oder gemäß EP-A-10 589, Seite 6, Zeile 5 bis Seite 8, Zeile 10. Gut geeignet sind auch Verbindungen der Formel

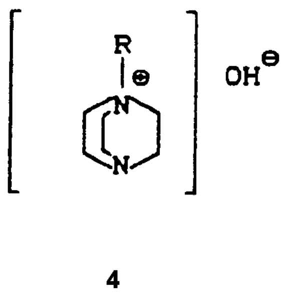

in welcher

R für einen Alkylrest mit 1 bis 20, vorzugsweise 1 bis 4 Kohlenstoffatomen, eine araliphatischen Kohlenwasserstoffrest mit 7 bis 10, vorzugsweise 7 Kohlenstoffatomen oder einen gesättigten cycloaliphatischen Kohlenwasserstoffrest mit 4 bis 10, vorzugsweise 5 bis 6 Kohlenstoffatomen, steht.

Zu den bevorzugten Katalysatoren gehören Verbindungen der allgemeinen Formel

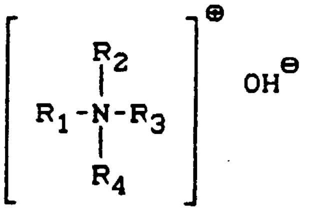

für welche

$R_1$, $R_2$ und $R_3$ für gleiche oder verschiedene Alkylreste mit 1 bis 18, insbesondere 1 bis 4 Kohlenstoffatomen, besonders bevorzugt für Methylgruppen stehen und

$R_4$ für einen Benzyl-, 2-Hydroxyethyl-, 2-Hydroxypropyl- oder einen 2-Hydroxybutyl-Rest steht.

Besonders bevorzugte Katalysatoren sind N,N,N-Trimethyl-N-benzylammoniumhydroxid und N,N,N-Trimethyl-N-(2-hydroxypropyl)-ammoniumhydroxid.

Die jeweils optimale Menge an Katalysator hängt von der Natur des Katalysators ab und kann mit Hilfe eines orientierenden Vorversuchs ermittelt werden. Die Menge des eingesetzten Katalysators liegt beim erfindungsgemäßen Verfahren, bezogen auf eingesetztes Ausgangsdiisocyanat im allgemeinen unterhalb 1 Gew.-%. Bei Verwendung von HDI als Ausgangsdiisocyanat, welches entsprechend den oben gemachten Ausführungen weitgehend von Kohlendioxid befreit worden ist, und unter Verwendung der bevorzugten Ammoniumhydroxid-Katalysatoren liegt die Katalysatormenge bei weniger als 0,03 Gew.-%, vorzugsweise bei weniger als 0,01 Gew.-% und besonders bevorzugt bei 0,0005 bis 0,005 Gew.-%, bezogen auf eingesetztes HDI.

Die Katalysatoren können lösungsmittelfrei benutzt werden, sie werden aber bevorzugt in verdünnter Lösung eingesetzt. Geeignete Lösungsmittel sind in den zitierten Veröffentlichungen beschrieben.

Trimerisierungs- und Urethanisierungsreaktion werden vorzugsweise lösemittelfrei durchgeführt, was die Mitverwendung von üblichen Lacklösungsmitteln, beispielsweise von Estern wie Butylacetat oder Ethoxyethylacetat, Ketonen wie Methyl-isobutyl-keton oder Methylethylketon oder Kohlenwasserstoffen wie Xylol bzw. von Gemischen derartiger Lösungsmitteln jedoch nicht ausschließt. Da im Anschluß jedoch nicht umgesetztes Ausgangsdiisocyanat entfernt wird, würde die Mitverwendung derartiger Lösungsmittel lediglich auf einen überflüssigen, zusätzlichen Aufwand hinauslaufen.

Zur Beendigung der Trimerisierungsreaktion wird im allgemeinen der Katalysator thermisch desaktiviert und/oder dem Reaktionsgemisch zur Desaktivierung des Katalysators ein geeignetes Katalysatorgift zugefügt. Geeignete Katalysatorengifte sind inbesondere im Falle der Verwendung der bevorzugten Ammoniumhydroxid-Katalysatoren anorganische Säuren wie Salzsäure, phosphorige Säure oder Phosphorsäure, Sulfonsäuren oder ihre Derivate wie Methansulfonsäure, p-Toluolsulfonsäure, p-Toluolsulfonsäuremethyl- oder -ethylester oder perfluorierte Sulfonsäuren wie beispielsweise Nonafluorbutansulfonsäure. Besonders gut geeignete Desaktivatoren, d.h. Katalysatorengifte sind saure Ester der phosphorigen Säure oder der Phosphorsäure wie beispielsweise Dibutylphosphit, Dibutylphosphat oder Di-(2-ethylhexyl)phosphat, die vorzugsweise in Form einer verdünnten Lösung in HDI eingesetzt werden. Die Desaktivatoren werden dem Reaktionsgemisch im allgemeinen in einer dem Katalysator zumindest äquivalenten Menge zugefügt. Da sich die Katalysatoren jedoch während der Trimerisierungsreaktion teilweise zersetzen können, ist oftmals die Zugabe einer unteräquivalenten Menge des Desaktivators ausreichend. Bei Verwendung von thermisch labilen Katalysatoren, beispielsweise von quaternären Ammoniumhydroxiden mit Hydroxyalkyl-Substituenten am Stickstoff, kann oftmals auch auf die Zugabe eines Katalysatorengifts völlig verzichtet werden, da bei Verwendung derartiger Katalysatoren oftmals ein Abbruch der Reaktion durch kurzzeitiges Erhitzen des Reaktionsgemischs auf oberhalb 100° C liegende Temperaturen ausreicht (thermische Zersetzung, d.h. Desaktivierung des Katalysators).

Andererseits ist zwecks Gewährleistung einer sicheren Abstoppung der Reaktion oftmals auch die Verwendung einer größeren als der äquivalenten Menge, beispielsweise einer doppelt äquivalenten Menge des Desaktivators zweckmäßig. Vorzugsweise wird somit unter Verwendung von Desaktivatoren (Katalysatorengiften) in bis zu 2-fach äquivalenten Mengen, bezogen auf die Menge des eingesetzten Katalysators, gearbeitet.

Der erfindungswesentliche Punkt besteht nun darin, neben der Trimerisierung eines Teils der Isocyanatgruppen des Ausgangsdiisocyanats einen weiteren Teil dieser Isocyanatgruppen durch Urethanisierung mit den beispielhaft genannten Diolen zu modifizieren. Hierbei ist es unerheblich, in welcher Reihenfolge Urethanisierung und Trimerisierung erfolgen mit der Einschränkung, daß beide Verfahrensschritte vor Entfernung des überschüssigen Ausgangsdiisocyanats erfolgen müssen. Dies bedeutet, daß die Urethanisierungsreaktion mit dem Diol unter Verbrauch eines Teils der Isocyanatgruppen vor Zugabe des Trimerisierungskatalysators erfolgen kann. Die Urethanisierung kann auch mit nur einem Teil des überschüssigen Diisocyanats erfolgen und weiteres Diisocyanat kann vor der nachfolgenden Trimerisierungsreaktion noch zugesetzt werden. Urethanisierung und Trimerisierung können gleichzeitig durchgeführt werden, indem Diol und Trimerisierungskatalysator gleichzeitig, beispielsweise im Gemisch zugesetzt werden. Die Urethanisierung kann beginnen bevor die Trimerisierung ganz abgeschlossen ist, sie kann auch nach abgeschlossener Trimerisierung eingeleitet werden. Das Diol kann auch in Teilmengen zu einem beliebigen Zeitpunkt des Verfahrens zugesetzt werden. Trimerisierung und Urethanisierung sollten abgeschlossen sein, bevor man beginnt, überschüssiges Ausgangsdiisocyanat zu entfernen.

Bezüglich der Wahl der Mengenverhältnisse der einzelnen Reaktionspartner ist vorzugsweise dafür Sorge zu tragen, daß das Ausgangsdiisocyanat stets in einem solchen Überschuß eingesetzt wird, daß nach erfolgter Umsetzung in dem Reaktionsgemisch noch mindestens 10 Gew.-%, vorzugsweise 35 bis 70 Gew.-%, bezogen auf Gesamtgemisch ohne Einbeziehung von gegebenenfalls mitverwendeten inerten Lösungsmittel, an freiem Ausgangsdiisocyanat vorliegen, und das Molverhältnis von Isocyanuratgruppen zu Urethangruppen in den von überschüssigem Ausgangsdiisocyanat befreiten Verfahrensprodukten bei 20:1 bis 0,2:1, vorzugsweise 5:1 bis 0,5:1 liegt.

Das erfindungsgemäße Verfahren wird im allgemeinen innerhalb des Temperaturbereichs von 0 bis 150° C durchgeführt, wobei die gegebenenfalls separat am Anfang oder am Ende durchgeführte Urethanisierung vorzugsweise bei 20 bis 150° C, insbesondere 80 bis 130° C und die gegebenenfalls separat vor oder nach der Urethanisierung erfolgende Trimerisierung vorzugsweise innerhalb des Temperaturbereichs von 0 bis 100° C und insbesondere von 20 bis 80° C erfolgt. Falls beide Reaktionsschritte gleichzeitig durchgeführt werden, liegt die Reaktionstemperatur im allgemeinen bei 0 bis 100° C, vorzugsweise 40 bis 80° C. Der Abbruch der Trimerisierungsreaktion erfolgt, wie dargelegt, thermisch und/oder durch Zugabe eines Katalysatorengifts, vorzugsweise nach Erreichen eines Trimerisierungsgrads von 10 bis 40 %, insbesondere 20 bis 30 %, wobei unter "Trimerisierungsgrad" der Prozentsatz der Isocyanatgruppen des Ausgangsdiisocyanats zu verstehen ist, die unter Trimerisierung abreagieren, wobei bei dieser Berechnung die Urethanbildungsreaktion unberücksichtigt bleibt. Wesentlich ist jedoch, wie oben bereits ausgeführt, daß nach beendeter Urethanisierung und Trimerisierung noch mindestens 10 Gew.-% unumgesetztes Ausgangsdiisocyanat im Reaktionsgemisch vorliegen.

Nach beendeter Urethanisierung und Trimerisierung wird das überschüssige Ausgangsdiisocyanat gegebenenfalls zusammen mit anderen, im Reaktionsgemisch vorliegenden flüchtigen Bestandteilen wie gegebenenfalls mitverwendete Lösungsmittel durch eine geeignete Maßnahme bis auf einen Restgehalt an Ausgangsdiisocyanat von maximal 0,5 Gew.-% abgetrennt. Man kann dies durch eine Dünnschichtdestillation oder Extraktion, beispielsweise mittels n-Hexan als Extraktionsmittel, erreichen.

Die erfindungsgemäßen Urethan- und Isocyanuratgruppen enthaltenden Verfahrensprodukte sind flüssige, praktisch farblose Polyisocyanate. Die erfindungsgemäßen Verfahrensprodukte auf Basis von HDI weisen im allgemeinen einen NCO-Gehalt von 6 bis 20 Gew.-% auf. Ihre HAZEN-Farbzahl (DIN 53 409) liegt unter 100, im allgemeinen unter 50.

Die erfindungsgemäßen Verfahrensprodukte sind in üblichen Lösungsmitteln wie Estern, Ketonen und Kohlenwasserstoffen löslich, lassen sich damit ohne Eintrübung verdünnen und zeichnen sich durch gute Lagerstabilität aus. Sie sind weitgehend frei von Nebenprodukten. Sie eignen sich in hervorragender Weise als Härter für Zweikomponenten-Polyurethanlacke, in denen als Polyhydroxylverbindungen die üblichen Polyetherpolyole, Polyesterpolyole und/oder Polyacrylatpolyole als Reaktionspartner für die Polyisocyanate vorliegen. Besonders bevorzugte Reaktionspartner für die erfindungsgemäßen Verfahrensprodukte sind Hydroxylgruppen aufweisende Polyacrylate, d.h. Polymerisate bzw. Copolymerisate von (Meth)acylsäure-alkylestern, gegebenenfalls mit Styrol oder anderen copolymerisierbaren olefinisch ungesättigten Monomeren.

Den Zweikomponentenpolyurethanlacken, die als Bindemittel Kombinationen derartiger Polyhydroxylverbindungen mit den erfindungsgemäßen Verfahrensprodukten als Härter enthalten, können selbstverständlich die aus der Lacktechnologie üblichen Hilfs- und Zusatzmittel wie Pigmente, Verlaufsmittel, Katalysatoren, Lösungsmittel u.dgl. einverleibt werden. Die Zweikomponenten-Polyurethanlacke, die die erfindungsgemäßen Verfahrensprodukte als Härter enthalten, härten bei Raumtemperatur oder wenig erhöhter Temperatur zu chemikalienbeständigen Lackfilmen aus.

Selbstverständlich ist es auch möglich, die erfindungsgemäßen Verfahrensprodukte in mit Blockierungsmitteln blockierter Form als Härter in Hitze-vernetzbaren Einkomponentenlacken zu verwenden. Als Blockierungsmittel eignen sich die hierfür üblichen Verbindungen wie beispielsweise Phenol, Kresole, Trimethylphenole, tert.-Butylphenole, tertiäre Alkohole wie tert.-Butanol, tert.-Amylalkohol, Dimethylphenylcarbinol; leicht Enole bildende Verbindungen wie Acetessigsäureethylester, Acetylaceton, Malonsäurediethylester; sekundäre aromatische Amine wie N-Methylanilin, die N-Methyltoluidine, N-Phenyltoluidin, N-Phenylxylidin; Imide wie Succinimid; Lactame wie ε-Caprolactam, δ-Valerolactam; Oxime wie Butanonoxim, Cyclohexanonoxim; Mercaptane wie Methylmercaptan, Ethylmercaptan, Butylmercaptan, 2-Mercaptobenzthiazol, α-Naphthylmercaptan, Dodecylmercaptan oder Triazole wie 1H-1,2,4-Triazol.

Die erfindungsgemäßen Verfahrensprodukte können auch mit Polyaminen kombiniert werden, deren Aminogruppen blockiert sind wie z.B. mit Polyketiminen, Polyaldiminen oder Oxazolanen. Unter dem Einfluß von Feuchtigkeit entstehen freie Aminogruppen und (im Falle der Oxazolane) freie OH-Gruppen, die unter Vernetzung mit den NCO-Gruppen abreagieren.

In allen genannten Lackkombinationen liegen die Polyisocyanatkomponente und der Reaktionspartner in solchen Mengen vor, daß auf jede (gegebenenfalls blockierte) NCO-Gruppe 0,8 bis 3, vorzugsweise 0,9 bis 1,8 (gegebenenfalls blockierte) gegenüber Isocyanaten reaktionsfähige Gruppen entfallen.

Die die erfindungsgemäßen Verfahrensprodukte, gegebenenfalls in blockierter Form, als Härter enthaltenden Beschichtungsmittel eignen sich zur Beschichtung beliebiger Substrate. Sie zeichnen sich gegenüber analogen Beschichtungsmitteln, die als Härter die üblichen Polyisocyanate enthalten, durch eine erhöhte Flexibilität der Beschichtungen aus. Das besonders bevorzugte Anwendungsgebiet für die erfindungsgemäßen Verfahrensprodukte besteht in ihrer Verwendung als Härter für Zweikomponenten-Kunststofflacke auf der Basis der oben beispielhaft genannten Polyhydroxylverbindungen, insbesondere bei der Lackierung von flexiblen Kunststoffteilen.

Die die erfindungsgemäßen Polyisocyanate enthaltenden Lacke ergeben Filme, die aber auch überraschend gut auf metallischem Untergrund haften, besonders lichtecht, wärmeformstabil und sehr abriebfest sind. Darüber hinaus zeichnen sie sich durch große Härte, Elastizität, sehr gute Chemikalienbeständigkeit, hohen Glanz, ausgezeichnete Wetterbeständigkeit und gute Pigmentierbarkeit aus.

In den nachfolgenden Beispielen beziehen sich alle Prozentangaben auf Gewichtsprozente.

## Beispiele

### Beispiel 1 (Herstellung einer Katalysatorlösung)

1000 g einer handelsüblichen, farblosen Lösung von N,N,N-Trimethyl-N-benzylammoniumhydroxid, 40 %ig in Methanol, werden mit 600 g 2-Ethylhexandiol-1,3 versetzt und verrührt. Unter gutem Rühren wird Methanol bei 30 bis 40° C im Vakuum der Wasserstrahlpumpe restlos entfernt. Die 40 %ige Stammlösung wird mit weiterem 2-Ethylhexandiol-1,3 auf eine Wirkstoffkonzentration von 0,5 % eingestellt.

### Beispiel 2 (Herstellung einer Katalysatorlösung)

100 g einer 70 %igen Lösung in Methanol von N,N,N-Trimethyl-N-(2-hydroxypropyl)-ammoniumhydroxid, hergestellt durch Umsetzung von Trimethylamin mit Propylenoxid in Methanol werden mit 60 g 2-Ethylhexanol versetzt und im Vakuum der Wasserstrahlpumpe von Methanol befreit. Mit weiterem 2-Ethylhexanol wird auf eine Wirkstoffkonzentration von 4 % eingestellt. Die Lösung ist braun gefärbt.

### Beispiel 3 (Herstellung eines Diols)

Aus 2920 Gewichtsteilen Adipinsäure, 2910 Gewichtsteilen Neopentylglykol und 470 Gewichtsteilen Hexandiol-1,6 wird bei 120 - 140° C eine Schmelze hergestellt. Dann wird die Temperatur langsam innerhalb von ca. 12 Stunden auf 180° C erhöht, wobei Wasser abdestilliert. Danach hält man die Schmelze ca. 2 Stunden auf 200° C. Nun fügt man 0,03 Gewichtsteile $SnCl_2.2\ H_2O$ als Katalysator zu, legt Vakuum an und erhitzt ca. 15 Stunden auf 180 bis 200° C.

Man erhält einen flüssigen, hellgelb gefärbten Polyester mit folgenden Daten:

OH-Zahl: 225

SZ: 1

Mittleres Molgewicht (aus Hydroxylzahl ber.): 498

Beispiel 4 (Herstellung eines Diols)

In einem mit Stickstoff gespülten 100 l-Kessel werden 57,3 kg ε-Caprolacton, 12,7 kg Hexandiol-1,6 und 3,5 g Zinn-II-octoat miteinander vermischt und auf 160° C erhitzt. Nach 4 Stunden bei 160° C ist die Reaktion beendet. Nach Abkühlen wird der Ansatz (70 kg) abgelassen, das Produkt ist bei Raumtemperatur flüssig.

Daten des Diols:
$\eta_{25° C}$: 330 mPas
OHZ: 172,4
SZ: 0,6
Farbzahl (HAZEN) nach DIN 53 409: 30
Mittleres Molgewicht (aus OH-Zahl ber.): 650

Eine Analyse mittels Gelchromatographie ergibt folgende Oligomerenverteilung des Polyesters:

| Oligomer Molgewicht | experimentell (Flächen-% = Gewichts-%) |
|---|---|
| 118 | 0,15 |
| 232 | 1,75 |
| 346 | 5,76 |
| 460 | 11,44 |
| 574 | 15,92 |
| 688 | 19,19 |
| 802 | 15,62 |
| 916 | 12,08 |
| 1030 | 8,15 |
| 1144 | 5,25 |
| >1144 | 4,69 |

Ergebnis: Mehr als 50 Gew.-% der im Polyester enthaltenen Moleküle liegen in einem Molgewichtsbereich von 460 bis 802.

Beispiel 5 (erfindungsgemäß)

1596 g (9,5 Mol) HDI werden in einem geeigneten Rührgefäß mit 650 g (1 Mol) Polyesterdiol aus Beispiel 4 vermischt und 3 h auf 90 bis 100° C erhitzt. Der NCO-Gehalt der Rektionsmasse ist danach auf 30,7 % abgefallen.

Nun wird ein starker Strom von reinem Stickstoff etwa 1 h bei 40° C durch die Flüssigkeit geleitet, die danach weniger als 5 ppm (Gewicht) gelöstes Kohlendioxid enthält. Während der gesamten weiteren Reaktion wird weiter Stickstoff durch die Reaktionsmasse geleitet.

Anschließend werden 21,9 g (ca. 0,1095 g Wirkstoff = ca. 70 ppm) der Katalysatorlösung aus Beispiel 1 innerhalb eines Zeitraumes von 15 bis 30 min eingetropft und dann innerhalb von 30 min auf 65 bis 70° C erhitzt und 2,5 Stunden bei dieser Temperatur gehalten. Der NCO-Gehalt des Rohprodukts liegt dann bei 22,8 %. Man gibt jetzt 0,22 g einer 25 %igen Lösung von Dibutylphosphat in HDI zu und rührt noch 15 min bei 60° C. Nun läßt man auf ca. 23° C abkühlen und entfernt überschüssiges HDI durch Destillation in einem Kurzwegverdampfer. Man erhält 610 g HDI zurück und gewinnt 1630 g einer viskosen farblosen Flüssigkeit mit folgenden charakteristischen Daten:
NCO-Gehalt: 11,85 %
Viskosität 9500 mPas/23° C
freies HDI: 0,07 %

Farbzahl (HAZEN) nach DIN 53 409: 30
Das Molverhältnis von im Produkt enthaltenen Urethangruppen zu Isocyanuratgruppen beträgt etwa 2:1 (berechnet).

## Beispiel 6

Man arbeitet wie in Beispiel 5 angegeben und benutzt dabei folgende Mengen:

2100 g (12,5 Mol) HDI
250 g (0,5 Mol) Polyesterdiol aus Beispiel 3
24,3 g Katalysatorlösung aus Beispiel 1
0,3 g 25 %ige Lösung von Dibutylphosphat in HDI

Man erhält nach Entfernung von unverbrauchtem HDI 968 g einer farblosen Flüssigkeit mit folgenden Daten:
NCO-Gehalt: 16,7 %
Viskosität: 4500 mPas/23° C
freies HDI: 0,12 %
Farbzahl (HAZEN) nach DIN 53 409: 40
Das Molverhältnis von im Produkt enthaltenen Urethanzu Isocyanuratgruppen errechnet sich zu etwa 1:1.

## Beispiel 7

Man arbeitet wie in Beispiel 5 und benutzt dabei folgende Mengen:

1428 g (8,5 Mol) HDI
250 g (0,5 Mol) Polyester aus Beispiel 3
19,6 g Katalysatorlösung aus Beispiel 1
0,2 g 25 %ige Lösung von Dibutylphosphat in HDI

Nach beendeter Abstoppung der Reaktion bei einem NCO-Gehalt der Mischung von 31,8 % wird überschüssiges HDI entfernt und man erhält 1014 g einer farblosen Flüssigkeit mit folgenden Daten:
NCO-Gehalt: 15,5 %
Viskosität: 7500 mPas/23° C
Freies HDI: 0,09 %
Farbzahl (HAZEN) nach DIN 53 409: 30
Das Molverhältnis von Urethan- zu Isocyanuratgruppen berechnet sich zu etwa 1:1.

## Beispiel 8 (erfindungsgemäß, im Vergleich zu Beispiel 5)

1596 g (9,5 Mol) HDI werden in einem geeigneten Rührgefäß auf 50° C erhitzt und durch Durchblasen mit Stickstoff von gelöstem Kohlendioxid bis auf einen Restgehalt von unter 5 ppm (Gewicht) befreit. Dann gibt man 6,5 g Katalysator aus Beispiel 2 zu, dabei steigt die Temperatur auf 60° C an. Man hält bei dieser Temperatur etwa 6 h. Danach ist der NCO-Gehalt auf 40,5 % abgesunken. Durch 10-minütiges Erhitzen des Gemisches auf 120° C wird der Katalysator desaktiviert. Nun gießt man 650 g des Polyesterdiols aus Beispiel 4 in die Flüssigkeit und rührt noch 4 Stunden bei 90 bis 100° C. Der NCO-Gehalt beträgt danach 23,0 %. Durch Dünnschichtdestillation in einem Kurzwegverdampfer wird bei 120° C monomeres HDI entfernt. Man erhält 1585 g einer viskosen Flüssigkeit mit folgenden charakteristischen Daten:
NCO-Gehalt: 12,1 %
Viskosität: 10500 mPas/23° C
freies HDI: 0,1 %
Farbzahl (HAZEN) nach DIN 53 409: 50

Beispiel 9 (erfindungsgemäß)

798 g (4,75 Mol) HDI werden wie in Beispiel 5 angegeben mit 244 g (0,375 Mol) Diol aus Beispiel 4 und 18 g (0,125 Mol) Cyclohexandimethanol-1,4 zur Reaktion gebracht. Mit 10 g Katalysatorlösung aus Beispiel 1 wird dann wie in Beispiel 5 angegeben bis zu einem NCO-Gehalt von 26,9 % trimerisiert und mit 0,12 g 25 %iger Lösung von Dibutylphosphat in HDI abgestoppt. Man erhält nach Abdestillieren von monomerem HDI 680 g einer viskosen Flüssigkeit mit folgenden Eigenschaften:
NCO-Gehalt: 12,8 %
Viskosität: 4700 mPas/23° C
freies HDI: 0,04 %
Farbzahl (HAZEN) nach DIN 53 409: 40

Das Molverhältnis Urethan zu Isocyanurat berechnet sich wie etwa 2:1.

Beispiele 10 bis 15 (erfindungsgemäß)

In den Beispielen 10 bis 12 wird so verfahren wie in Beispiel 5, indem zuerst urethanisiert und dann trimerisiert wird, in den Beispielen 13 bis 15 wird verfahren wie in Beispiel 8, indem zuerst trimerisiert und dann urethanisiert wird. Katalyse und Abstoppung erfolgt wie angegeben. In der folgenden Tabelle sind Daten der Umsetzung und Charakteristika der Endprodukte angegeben.

**Tabelle 1**

| Beispiel | eingesetzte Menge HDI | eingesetzte Menge Diol aus Bsp. 4 | NCO-Gehalt bei Beend. d. Reaktion | Produktmenge n. Entf. von HDI | NCO-Gehalt d. Prod./ Viskosität bei 23°C | Farbzahl HAZEN n. DIN 53409 | Gehalt a. fr. HDI | Molverhältn. Urethan:Isocyanurat |
|---|---|---|---|---|---|---|---|---|
| 10 | 672 g | 41 g | 35,0 % | 335 g | 17,4 %/ 5500 mPas | 80 | 0,04 | 1:4 |
| 11 | 714 g | 83 g | 32,5 % | 418 g | 16,3 %/ 6000 mPas | 50 | 0,07 | 1:2 |
| 12 | 798 g | 166 g | 27,0 % | 615 g | 14,7 %/ 10000 mPas | 30 | 0,04 | 1:1 |
| 13 | 672 g | 41 g | 38,4 % | 270 g | 17,0 %/ 3000 mPas | 90 | 0,1 | 1:4 |
| 14 | 714 g | 83 g | 34,0 % | 375 g | 16,8 %/ 4200 mPas | 40 | 0,12 | 1:2 |
| 15 | 798 g | 166 g | 32,4 % | 450 g | 13,1 %/ 3000 mPas | 40 | 0,05 | 1:1 |

Beispiel 16 (Verwendungsbeispiel)

Die beiden erfindungsgemäßen Polyisocyanate aus Beispiel 5 und Beispiel 15 werden in Kombination mit einem Hydroxylpolyacrylat im Vergleich mit zwei Polyisocyanaten vom Stand der Technik als Lackbindemittel zur Lackierung eines elastischen Kunststoffs eingesetzt.

Als Hydroxypolyacrylat wird die 65 %ige Lösung in Xylol eines Copolymerisats aus 18 Gew.-% Styrol, 26 Gew.-% Hydroxyethylacetat, 55 Gew.-% Butylacrylat und 1 % Acrylsäure eingesetzt. Die Lösung hat eine Hydroxylzahl von 72, eine Säurezahl von 5,9 une eine Viskosität von 2300 mPas/23° C.

Als Vergleichspolyisocyanate werden das Isocyanuratpolyisocyanat gemäß Beispiel 2 der EP-A-0010589, das nicht Diol-modifiziert ist (A) und Diol-modifiziertes Isocyanuratpolyisocyanat (B), ebenfalls auf HDI basierend, das nach DE-OS 3 219 608 Beispiel 9 hergestellt wurde, eingesetzt.

Polyisocyanat (A) hat lösemittelfrei einen NCO-Gehalt von 21,8 % und eine Viskosität von 4000 mPas/23° C, Polyisocyanat (B) hat einen NCO-Gehalt von 19,0 % und eine Viskosität von 11 500 mPas/23° C.

Die Kombinationen werden zur Lackierung von Platten aus einem halbharten, elastischen PUR-Integralschaumkunststoff eingesetzt. Die Platten sind mit einer Grundierung vorbehandelt.

Die Kombination aus Polyisocyanat und Hydroxylkomponente werden im NCO/OH-Verhältnis von 1:1 hergestellt. In der üblichen Weise wird vorher in die Hydroxylkomponente ein $TiO_2$-Pigment (vom Rutil-Typ) über einen Dreiwalzenmischer eingearbeitet. Das Gewichtsverhältnis von organischem Bindemittel zu Pigment beträgt 1,5 im spritzfertigen Lack. Als Katalysator fügt man 0,3 Gew.-% (bez. auf Bindemittel) Diazabicyclooctan zu.

Die Gemische werden mit weiteren Lösemitteln auf eine Auslaufzeit (DIN 53 211, 4 mm) von ca. 20 sec eingestellt. Die Verarbeitungszeit dieser spritzfertigen Lacke im geschlossenen Gefäß beträgt mindestens 20 sec. Sie werden auf die Kunststoffplatten aufgespritzt und die Eigenschaften untersucht. Die Ergebnisse sind in der Tabelle 2 zusammengefaßt. Die Haftung, der Glanz und die Schlagelastizität der Lackfilme sind nicht angegeben. Sie liegen in allen Fällen auf hohem Niveau.

**Tabelle 2**

| Prüfung | Lack mit Vergl.-polyisocyanat (A) | Lack mit Vergl.-polyisocyanat (B) | Lack mit Polyisocyanat aus Beispiel 5 | Lack mit Polyisocyanat aus Beispiel 15 |
|---|---|---|---|---|
| Pendelhärte (s) (DIN 53157) nach | | | | |
| 45 min/80°C | 32 | 35 | 28 | 27 |
| 7 Tagen/ca. 23°C | 100 | 120 | 105 | 50 |
| 14 Tagen/ca. 23°C | 125 | 130 | 110 | 83 |
| 14 Tagen/ca. 23°C + 30 min 80°C | 130 | 135 | 120 | 90 |
| Anlösbarkeit nach Lagerung des Lackfilms 45 min bei 80°C und 14 Tage bei ca. 23°C (1) | | | | |
| Toluol | 2 | 2 | 2 | 1-2 |
| Methoxypropylacetat | 1 | 1 | 1-2 | 2 |
| Ethylacetat | 2 | 2-3 | 2-3 | 3 |
| Aceton | 3 | 3 | 2-3 | 2-3 |
| Knicktest bei verschiedenen Temperaturen/ 1 Inch (= 2,54 cm) (2) | | | | |
| +20°C | + | + | + | + |
| +5°C | + | + | + | + |
| 0°C | 0 | - | + | + |
| -5°C | - | - | + | + |
| -10°C | - | - | + | + |
| -15°C | - | - | + | + |
| -20°C | - | - | + | + |
| -40°C | - | - | - | + |

+ = in Ordnung, 0 = beginnende Rißbildung, - = gerissen

Erläuterungen zur Tabelle 2

(1) Die Anlösbarkeit der Lackfilme wird beurteilt nach 1 min Einwirkung der Lösemittel. Die Schädigung

des Lackfilms wird in 6 Stufen beurteilt, von 0 = Lackfilm ist völlig unverändert bis 5 = Lackfilm löst sich auf.

(2) Der Knicktest erfolgt mit den PUR-Kunststoffplatten. Nach Aufspritzen der Lacke auf die mit einer Grundierung versehenen, leicht angeschliffenen Platten wird kurz abgelüftet und 45 Minuten bei 80° C eingebrannt und danach 1 Woche bei ca. 23° C gealtert. man schneidet nun 2 cm breite Streifen, die bei den jeweiligen Meßtemperaturen ca. 30 Minuten gelagert werden. Anschließend biegt man diese Streifen um einen 1 Inch-Dorn (2,54 cm), der ebenfalls auf die jeweilige Meßtemperatur gebracht wurde. Auch die Prüfung erfolgt bei der jeweiligen Meßtemperatur (in der Kältekammer).

Beurteilung der Proben:

+: Film in Ordnung
0: beginnende Rißbildung
-: gerissen

Beispiel 17

In diesem Beispiel wird untersucht welche Vorteile die erfindungsgemäßen Polyisocyanate bei der Langzeitlagerung in üblichen Lacklösemitteln haben. Die beiden Polyisocyanate aus den Beispielen 5 und 15 werden wieder verglichen mit den Polyisocyanaten (A) und (B). Die Langzeitlagerung erfolgt bei Raumtemperatur in geschlossenen Glasflaschen, die mit dem Auge geprüft werden, in den Lösemitteln Methoxypropylacetat (MPA), Ethylglykolacetat (EGA), Xylol (X), Butylacetat (BA) und Ethylacetat (EA). Die Ergebnisse gibt Tabelle 3 wieder.

Tabelle 3

| Lösemittel | Polyisocyanat | 7 Tage 35 % | 7 Tage 30 % | 14 Tage 35 % | 14 Tage 30 % | 21 Tage 35 % | 21 Tage 30 % | 28 Tage 35 % | 28 Tage 30 % | 2 Monate 35 % | 2 Monate 30 % | 4 Monate 35 % | 4 Monate 30 % |
|---|---|---|---|---|---|---|---|---|---|---|---|---|---|
| MPA | (A) | 0 | 0 | 0 | 0 | 0 | 1 | 1 | 1-2 | - | - | - | - |
| | (B) | 0 | 0 | 0 | 1 | 0 | 2 | 1 | 2 | - | - | - | - |
| | aus Bsp. 5 | 0 | 0 | 0 | 0 | 0 | 0 | 0 | 0 | 0 | 0 | 0 | 0 |
| | aus Bsp. 15 | 0 | 0 | 0 | 0 | 0 | 0 | 0 | 0 | 0 | 0 | 0 | 0 |
| EGA | (A) | 0 | 0 | 0 | 0 | 0 | 0 | 1 | 2 | - | - | - | - |
| | (B) | 0 | 0 | 0 | 0 | 1 | 2 | - | - | - | - | - | - |
| | aus Bsp. 5 | 0 | 0 | 0 | 0 | 0 | 0 | 0 | 0 | 1 | 1 | - | - |
| | aus Bsp. 15 | 0 | 0 | 0 | 0 | 0 | 0 | 0 | 0 | 0 | 0 | 0 | 1 |
| X | (A) | 0 | 0 | 0 | 0 | 0 | 0 | 1 | 2 | - | - | - | - |
| | (B) | 0 | 0 | 1 | 2 | - | - | - | - | - | - | - | - |
| | aus Bsp. 5 | 0 | 0 | 0 | 0 | 0 | 1 | 0 | 1 | - | - | - | - |
| | aus Bsp. 15 | 0 | 0 | 0 | 0 | 0 | 0 | 0 | 1 | - | - | - | - |
| BA | (A) | 0 | 0 | 0 | 1 | 1 | 2 | - | - | - | - | - | - |
| | (B) | 0 | 0 | 0 | 1 | 1 | 2 | - | - | - | - | - | - |
| | aus Bsp. 5 | 0 | 0 | 0 | 0 | 0 | 0 | 0 | 0 | 0 | 1 | 0 | 1 |
| | aus Bsp. 15 | 0 | 0 | 0 | 0 | 0 | 0 | 0 | 1 | 0 | 2 | 0 | 2 |
| EA | (A) | 0 | 0 | 1 | 0 | 1 | 0 | 1 | 1 | - | - | - | - |
| | (B) | 0 | 0 | 0 | 0 | 1 | 1 | 2 | 1 | - | - | - | - |
| | aus Bsp. 5 | 0 | 0 | 0 | 0 | 0 | 0 | 0 | 0 | 0 | 1 | 0 | 1 |
| | aus Bsp. 15 | 0 | 0 | 0 | 0 | 0 | 0 | 0 | 0 | 1 | 0 | 1 | 1 |

Erklärungen der Tabelle: 0 = in Ordnung, klare Lösung; 1 = beginnende Trübung; 2 = Eintrübung

Zusammenfassung der Ergebnisse aus den Beispielen 16 und 17

Die erfindungsgemäßen Lackpolyisocyanate zeichnen sich gegenüber dem Stand der Technik dadurch aus, daß sie zu Lackfilmen mit höherer Elastizität, vor allem mit höherer Biegeelastizität bei tiefer Temperatur führen. Dabei ist die geringfügig geringere Oberflächenhärte für alle Praxisanwendungen noch voll ausreichend. Deutlich überlegen sind die Produkte des erfindungsgemäßen Verfahrens auch bei Lagerung in verdünnten Lösungen, was ihre gute Verträglichkeit beweist.

**Patentansprüche**

1. Verfahren zur Herstellung von Isocyanuratpolyisocyanaten durch Trimerisierung eines Teils der Isocyanatgruppen von 1,6-Diisocyanatohexan oder von dessen Gemischen mit anderen (cyclo)aliphatischen Diisocyanaten mit mindestens 30 mol-% 1,6-Diisocyanatohexan in Gegenwart von die Trimerisierung von Isocyanatgruppen beschleunigenden Katalysatoren, Abbruch der Trimerisierungsreaktion beim jeweils gewünschten Trimerisierungsgrad und Entfernung von nicht umgesetztem Ausgangsdiisocyanat bis auf einen Restgehalt von max. 0,5 Gew.-% und von gegebenenfalls weiteren flüchtigen Bestandteilen,
   dadurch gekennzeichnet, daß man dem Reaktionsgemisch mindestens ein Estergruppen aufweisendes Diol mit einem mittleren aus der Hydroxylzahl berechneten Molekulargewicht von 350 bis 950 in einer Menge von 1 bis 50 Gew.-%, bezogen auf das Gewicht des als Ausgangsmaterial eingesetzten Diisocyanats, gegebenenfalls unter Mitverwendung von Estergruppen-freien Diolen des Molekulargewichtsbereichs 62 bis 300 unter Einhaltung eines Molverhältnisses von Estergruppen-freiem Diol zu Estergruppen enthaltenden Diol von bis zu 1: 1, hinzufügt und mit einem Teil der vorliegenden Isocyanatgruppen unter Urethanbildung abreagieren läßt, wobei diese Diolzugabe vor, während und/oder nach der Trimerisierung, jedoch vor Entfernung des überschüssigen Ausgangsdiisocyanats erfolgen kann,
   und wobei die Art und Mengenverhältnisse der Reaktionspartner so gewählt werden, daß in dem Reaktionsgemisch ohne Einbeziehung von gegebenenfalls mitverwendetem inerten Lösemittel nach beendeter Umsetzung noch mindestens 10 Gew.-% an freiem Ausgangsdiisocyanat vorliegen und das Molverhältnis von Isocyanuratgruppen zu Urethangruppen in den Verfahrensprodukten bei 20:1 bis 0,2:1 liegt.

2. Verfahren gemäß Anspruch 1, dadurch gekennzeichnet, daß man als Ausgangsdiisocyanat 1,6-Diisocyanatohexan verwendet.

3. Verfahren gemäß Anspruch 1 und 2, dadurch gekennzeichnet, daß man als Estergruppen aufweisendes Diol einen Polyester der Adipinsäure verwendet.

4. Verfahren gemäß Anspruch 1 und 2, dadurch gekennzeichnet, daß man als Estergruppen aufweisendes Diol einen Polyester aus ε-Caprolacton verwendet.

5. Verfahren nach Anspruch 1, 2 und 4, dadurch gekennzeichnet, daß man als Estergruppen aufweisendes Diol ein Polyesterdiol verwendet, welches durch Umsetzung von ε-Caprolacton mit 1,6-Dihydroxyhexan hergestellt worden ist und dessen Moleküle zu mehr als 50 Gew.-% ein Molekulargewicht von 460 bis 802 aufweisen.

6. Gemäß Anspruch 1 bis 5 erhaltene Isocyanuratpolyisocyanate.

7. Verwendung der gemäß Anspruch 1 bis 5 erhaltenen Isöcyanuratpolyisocyanate, gegebenenfalls in mit Blockierungsmitteln für Isocyanatgruppen blockierter Form, zur Herstellung von Polyurethankunststoffen, inabesondere in Zweikomponenten-Polyurethanlacken.

**Claims**

1. A process for the production of isocyanurate polyisocyanates by partial trimerization of the isocyanate groups of 1,6-diisocyanatohexane or mixtures thereof with other (cyclo)aliphatic diisocyanates with at least 30 mol-% 1,6-diisocyanatohexane in the presence of catalysts which accelerate the trimerization of isocyanate groups, termination of the trimerization reaction at the particular degree of trimerization required and removal of unreacted starting diisocyanate to a residual content of at most 0.5% by weight and of any other volatile constituents,
   characterized in that at least one diol containing ester groups and having an average molecular weight of 350 to 950 is added to the reaction mixture before, during and/or after the trimerization, but before removal of the excess starting diisocyanate in a quantity of 1 to 50% by weight, based on the weight of the diisocyanate used as starting material, optionally using diols free from ester groups and having a molecular weight in the range from 62 to 300, the molar ratio of diol free from ester groups to diol containing

ester groups being maintained at up to 1:1, and is allowed to react off with some of the isocyanate groups present with urethane formation,

the type of reactants used and the quantitative ratios between them being selected so that, on completion of the reaction, at least 10% by weight of free starting diisocyanate is still present in the reaction mixture, not including any inert solvent used, and the molar ratio of isocyanurate groups to urethane groups in the end products of the process is from 20:1 to 0.2:1.

2. A process as claimed in claim 1, characterized in that 1,6-diisocyanatohexane is used as the starting diisocyanate.

3. A process as claimed in claims 1 and 2, characterized in that a polyester of adipic acid is used as the diol containing ester groups.

4. A process as claimed in claims 1 and 2, characterized in that a polyester of ε-caprolactone is used as the diol containing ester groups.

5. A process as claimed in claims 1, 2 and 4, characterized in that a polyester diol which has been prepared by reaction of ε-caprolactone with 1,6-dihydroxyhexane and in which more than 50% by weight of the molecules have a molecular weight of 460 to 802 is used as the diol containing ester groups.

6. Isocyanurate polyisocyanates obtained by the process claimed in claims 1 to 5.

7. The use of the isocyanurate polyisocyanates obtained by the process claimed in claims 1 to 5, optionally blocked by blocking agents for isocyanate groups, for the production of polyurethane plastics, particularly in two-component polyurethane lacquers.

## Revendications

1. Procédé pour fabriquer des polyisocyanates à groupes isocyanurate en trimérisant une partie des groupes isocyanate du 1,6-diisocyanatohexane ou de ses mélanges avec d'autres diisocyanates (cyclo)aliphatiques avec au moins 30 mol-% de 1,6-diisocyanatohexane en présence de catalyseurs accélérant la trimérisation des groupes isocyanate, en arrêtant la réaction de trimérisation dès que le degré de trimérisation désiré est atteint et en éliminant le diisocyanate de départ n'ayant pas réagi jusqu'à l'obtention d'une teneur résiduelle maximale de 0,5 % en poids ainsi qu'éventuellement d'autres composants volatils, caractérisé en ce qu'on ajoute au mélange réactionnel au moins un diol présentant des groupes ester et d'un poids moléculaire moyen de 350 à 950 calculé à partir de l'indice d'hydroxyle en une quantité de 1 à 50% en poids par rapport au poids du diisocyanate mis en oeuvre comme substance de départ, éventuellement en utilisant également des diols sans groupes ester d'un poids moléculaire de 62 à 300, en respectant un rapport molaire pouvant aller jusqu'à 1:1 entre les diols sans groupes ester et les diols contenant des groupes ester, et qu'on le fait réagir avec une partie des groupes isocyanate présents, avec formation d'uréthanne, l'addition de diols pouvant avoir lieu avant, pendant et/ou après la trimérisation, mais avant l'élimination de l'excès de diisocyanate de départ, et le genre ainsi que le rapport de mélange des partenaires réactionnels étant choisis de manière telle qu'il reste encore dans le mélange réactionnel après la fin de la réaction sans compter le solvant inerte éventuel au moins 10% en poids de diisocyanate de départ libre et que le rapport molaire entre les groupes isocyanurate et les groupes uréthanne dans les produits du procédé soit de 20:1 à 0,2:1.

2. Procédé selon la revendication 1, caractérisé en ce que l'on emploie comme diisocyanate de départ le 1,6-diisocyanatohexane.

3. Procédé selon les revendications 1 et 2, caractérisé en ce que l'on emploie comme diol présentant des groupes ester un polyester d'acide adipique.

4. Procédé selon les revendications 1 et 2, caractérisé en ce que l'on emploie comme diol présentant des groupes ester un polyester de ε-caprolactone.

5. Procédé selon les revendications 1, 2 et 4, caractérisé en ce que l'on emploie comme diol présentant des groupes ester un polyesterdiol fabriqué en faisant réagir la ε-caprolactone avec du 1,6-dihydroxyhexane

et dont plus de 50% en poids des molécules ont un poids moléculaire de 460 à 802.

6. Polyisocyanates à groupes isocyanurates obtenus selon les revendications 1 à 5.

7. Utilisation des polyisocyanates à groupes isocyanurates obtenus selon les revendications 1 à 5, éventuellement sous forme bloquée avec des agents bloquant les groupes isocyanate, pour la fabrication de matières plastiques de polyuréthanne, en particulier des vernis polyuréthanniques à deux composants.